(19) Europäisches Patentamt
European Patent Office
Office européen des brevets

(11) **EP 3 801 027 B1**

(12) **EUROPEAN PATENT SPECIFICATION**

(45) Date of publication and mention
of the grant of the patent:
**24.12.2025 Bulletin 2025/52**

(21) Application number: **19729029.9**

(22) Date of filing: **11.06.2019**

(51) International Patent Classification (IPC):
**A01N 59/26** $^{(2006.01)}$   **A01P 3/00** $^{(2006.01)}$
**C01B 25/163** $^{(2006.01)}$

(52) Cooperative Patent Classification (CPC):
**A01N 59/26; C01B 25/163**

(86) International application number:
**PCT/EP2019/065208**

(87) International publication number:
**WO 2019/238675 (19.12.2019 Gazette 2019/51)**

(54) **METHOD FOR PRODUCING PHOSPHONATE SALTS, AND ANTIFUNGAL USE OF COMPOSITIONS COMPRISING PHOSPHONATE SALTS AND SULFUR**

VERFAHREN ZUR HERSTELLUNG VON PHOSPHONATSALZEN UND PILZHEMMENDE VERWENDUNG VON ZUSAMMENSETZUNGEN, DIE PHOSPHONATSALZE UND SCHWEFEL ENTHALTEN

PROCÉDÉ DE PRODUCTION DE SELS DE PHOSPHONATE ET UTILISATION ANTIFONGIQUE DE COMPOSITIONS COMPRENANT DES SELS DE PHOSPHONATE ET DU SOUFRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.06.2018 EP 18177043**

(43) Date of publication of application:
**14.04.2021 Bulletin 2021/15**

(73) Proprietor: **PrimingTec UG (haftungsbeschränkt)**
**67273 Bobenheim (DE)**

(72) Inventor: **KÖHLE, Harald**
**67273 Bobenheim (DE)**

(74) Representative: **Meissner Bolte Partnerschaft mbB**
**Patentanwälte Rechtsanwälte**
**Postfach 86 06 24**
**81633 München (DE)**

(56) References cited:
WO-A1-2013/083250    WO-A1-2013/098573
WO-A2-2009/150076    DE-A1- 2 453 401
US-A1- 2006 234 900    US-B2- 8 101 548

Remarks:
The file contains technical information submitted after the application was filed and not included in this specification

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention relates to a method for producing a composition containing a phosphonate salt, the method comprising mixing phosphonic acid in solid form with a basic salt in solid form and sulfur in solid form, where the basic salt in solid form is selected from dolomite in solid form and dolomite in solid form in combination with one of $KHCO_3$, $K_2CO_3$, $NaHCO_3$ or $Na_2CO_3$. The invention moreover relates to compositions B comprising (a) a phosphonate salt of dolomite or of dolomite and one of $KHCO_3$, $K_2CO_3$, $NaHCO_3$ or $Na_2CO_3$, and (b) sulfur and optionally also urea. In one embodiment, this composition B is solid. In another embodiment, this composition B comprises calcium phosphonate, magnesium phosphonate and sulfur. The invention also relates to the use of this composition B for combating harmful fungi, where the use does not encompass the therapeutical treatment of the human or animal body.

Organic and inorganic phosphonates are suitable phosphorus suppliers in agriculture and are thus described as fertilizers. They are moreover described to be useful as fungicides.

The preparation of phosphonate salts is generally carried out in aqueous medium.

In general, phosphonic acid is reacted with a basic salt of the desired cation, such as a carbonate or a hydroxide, in aqueous medium, or by a cation exchange of a phosphonate salt, e.g. an ammonium phosphonate, in aqueous medium.

For instance, WO 2009/150076 relates to the use of calcium phosphonates for increasing the effect of fungicides. Calcium hydrogenphosphonate is prepared by reacting an aqueous solution of phosphorous acid with calcium hydroxide.

US 5,707,418 relates to a process for preparing highly concentrated phosphorus fertilizers by using a complexing agent as stabilizer. Potassium phosphonate is prepared by mixing water, potassium hydroxide, phosphorous acid and optionally other components.

US 2006/0234900 relates to a method for producing phosphonates in the form of a solid or gel by neutralizing a phosphonic acid with a source of alkalinity. However, the presence of water in the reaction is not ruled out. To the contrary, as explained in paragraph [0017], it is expected that water will be present in the neutralization reaction composition even if not added as a separate component. The source of this water is the reactants - as further explained in this paragraph, commonly available phosphonic acid containing 60% or 30% of phosphonic acid (the rest being water) is considered as a useful starting material, whereas anhydrous phosphonic acid is ruled out. Moreover, this document describes explicitly only organic phosphonic acids; inorganic phosphonic acid ($H_3PO_3$) not being mentioned as suitable starting material. In the examples, Dequest 2010 from Solutia, a 60% hydroxyethylidene 1,1-diphosphonic acid, is used.

WO 2013/083250 relates to the preparation of aluminium hydrogen phosphites which are to be used as synergists for flame retarding agents.

WO 2013/098573 relates to soil and plant conditioners comprising a natural zeolite substrate and a salt of phosphonic acid.

US 8,101,548 relates to a method for preparing urea phosphite by mixing solid phosphorous acid and solid urea, and to the use thereof in fertilizer or fungicide compositions.

For economic reasons, it is desirable to store and transport the phosphonates in concentrated or even solid form in order to avoid storage and transport costs for water. For this purpose, water contained in the aqueous dispersions resulting from the prior art methods for preparing phosphonates has to be removed, which is however also related with relatively high costs.

It was an object of the present invention to provide a method which yields phosphonates in solid form or in a highly concentrated form in an economic and simple manner.

It was surprisingly found that this object is achieved by mixing solid phosphonic acid, a solid basic salt selected from dolomite in solid form optionally in combination with one of $KHCO_3$, $K_2CO_3$, $NaHCO_3$ or $Na_2CO_3$, and sulfur in solid form.

The invention thus relates in a first aspect to a method for producing a composition containing a phosphonate salt, the method comprising mixing phosphonic acid in solid form with a basic salt in solid form and with sulfur in solid form, where the basic salt in solid form is selected from the group consisting of dolomite in solid form and dolomite in solid form in combination with one of $KHCO_3$, $K_2CO_3$, $NaHCO_3$ or $Na_2CO_3$.

In general, no liquid, especially no water, is added to the reaction of phosphonic acid (in solid form) and the basic salt (in solid form). However, in some instances, especially when the basic salt is a carbonate, such as non-calcinated dolomite (dolomite and its different forms are defined below), it might be useful to add catalytic amounts of water to enhance the reaction rate. Catalytic amounts means at most 1% by weight of water, based on the total weight of phosphonic acid and the basic salt. Preferably, catalytic amounts means at most 1% by weight of water, based on the total weight of phosphonic acid. Specifically, no water is added.

The method of the invention can alternatively be termed as a method for producing a phosphonate salt, the method comprising mixing phosphonic acid in solid form with a basic salt in solid form and with sulfur in solid form, where the basic salt in solid form is selected from the group consisting of dolomite in solid form and dolomite in solid form in combination with one of $KHCO_3$, $K_2CO_3$, $NaHCO_3$ or $Na_2CO_3$.

A composition (A) in solid form is obtainable by the method of the invention.

The invention furthermore relates to a composition (B), comprising (a) a phosphonate salt of dolomite or of dolomite and one of $KHCO_3$, $K_2CO_3$, $NaHCO_3$ or $Na_2CO_3$, and (b) sulfur and optionally also urea.

One typical problem arising in the field of fungicidal control lies in the need to reduce the dosage rates of the active ingredient in order to reduce or avoid unfavorable environmental or toxicological effects whilst still allowing effective pest control.

Another problem encountered concerns the need to have available fungicidal agents which are effective against a broad spectrum of fungi.

There also exists the need for fungicidal agents that combine knock-down activity with prolonged control, that is, fast action with long lasting action.

Surprisingly, it has been observed that the combined use of calcium phosphonate, magnesium phosphonate and sulfur solves at least some of these problems.

Moreover, the invention relates to the use of these compositions or of an aqueous dispersion thereof for combatting harmful fungi, and to a method for combating harmful fungi, wherein the fungi, their habitat or the materials or plants to be protected against fungal attack, or soil in which the plants grow or are to grow or plant propagation material are treated with an effective amount of the composition defined above and specified in more detail below or with an aqueous dispersion thereof. "Habitat" does not include the human or animal body. Thus, the present use or method does not include the therapeutical treatment of the human or animal body. Further, the invention also relates to a method for protecting seed or plants which grow therefrom from the attack of harmful fungi, which method comprises treating the seeds with the solid composition of the invention or with an aqueous dispersion thereof.

In terms of the present invention, phosphorous acid and phosphonic acid are used synonymously and designate $H_3PO_3$ (depicted either as $H-P(=O)(OH)_2$ or as its tautomer $P(OH)_3$). Analogously, the terms phosphite and phosphonate are used synonymously, both designating the salts of phosphonic acid. The phosphonates can be primary or secondary phosphonates. In primary phosphonates one proton is formally replaced by a cationic equivalent ($M^+(H_2PO_3)^-$; $M^+$ is a cationic equivalent, such as a metal ("Met") cation equivalent $(Met^{x+})_{1/x}$ or an ammonium cation $NH_4^+$), and in secondary phosphonates, two protons are replaced by a cationic equivalent ($(M^+)_2(HPO_3)^{2-}$). For instance, secondary calcium phosphonate is thus $Ca(HPO_3)$, secondary magnesium phosphonate is $Mg(HPO_3)$, secondary potassium phosphonate is $K_2(HPO_3)$ and secondary sodium phosphonate is $Na_2(HPO_3)$, while primary calcium phosphonate is $Ca(H_2PO_3)_2$, primary magnesium phosphonate is $Mg(H_2PO_3)_2$, primary potassium phosphonate is $K(H_2PO_3)$ and primary sodium phosphonate is $Na(H_2PO_3)$.

If used without the specification whether primary or secondary, the term "phosphonate" relates to primary phosphonate, to secondary phosphonate or to a mixture of primary and secondary phosphonate. The term "phosphonate" is used without specifying whether it is primary or secondary or a mixture of both if the distinction is of no relevance or if it is not possible to determine its type without undue burden.

The term "ammonium" in context with the starting materials of the reaction, i.e. the ammonium salt (hydroxide or carbonate), relates to the unsubstituted ammonium cation $NH_4^+$.

The term "solid form" in context with the starting materials of the reaction, e.g. the solid basic salt, the solid phosphonic acid, the solid sulfur and other optionally used solid components, means that the material is solid at 25° C and 1013 mbar. This implies that the material contains at most 10% by weight, preferably at most 5% by weight, in particular at most 2% by weight, specifically at most 1% by weight, very specifically at most 0.5% by weight, of liquid components (generally water), based on the total weight of the material. The maximum amount of water does however not include water contained as crystal water. Hydrates of the starting materials, especially of the basic salts, can be used as long as they are solid at 25° C and 1013 mbar. In a particular embodiment, however, the starting materials contain at most 10% by weight, preferably at most 5% by weight, in particular at most 2% by weight, specifically at most 1% by weight, of liquid components (generally water), inclusive water contained as crystal water, based on the total weight of the starting materials.

The term "solid" in context with the solid compositions of the invention containing a phosphonate salt of course also means that this composition is solid at 25° C and 1013 mbar. Preferably, the solid composition contains at most 10% by weight, preferably at most 5% by weight, in particular at most 2% by weight, specifically at most 1% by weight, very specifically at most 0.5% by weight, of liquid components (generally water), based on the total weight of the composition.

The term "solid" is used in the customary sense.

The prerequisite of reacting the solid basic salt with phosphonic acid in solid form and sulfur in solid form does however not imply that the reactants remain solid throughout the whole reaction. The reaction may proceed at least temporarily at elevated temperature, caused e.g. by the exotherm of the reaction, thus that the phosphonic acid may melt. This prerequisite of reacting the solid basic salt with phosphonic acid in solid form and sulfur in solid form excludes however the presence of any liquid dispersing medium, such as a solvent, and especially excludes the presence of added water. In other words, the reaction is not carried out in the presence of a liquid dispersing medium, such as a solvent, and is especially not carried out in the presence of added water. "Added water" expresses that no water is added as solvent to the reaction; the reaction may however contain intrinsically present water; moreover, as explained above, in some instances it might be expedient to add catalytic amounts of water (of at most 1% by weight, based on the total weight of basic salt and phosphonic acid, preferably of at most 1% by weight, based on the total weight phosphonic acid). Intrinsically present water is water which may be introduced into the reaction with the reactants if these are not completely anhydrous and contain some residual moisture, or contain crystal water; moreover, it is water formed in the course of the neutralization reaction of the basic metal salt or of ammonium hydroxide or carbonate with phosphonic acid.

In "mixed salts", the crystal lattice contains at least two different types of cations and/or anions. In terms of the present invention, a "mixed salt" is preferably a salt in which the crystal lattice contains at least two different types of cations.

"Mixtures" of two or more different salts, by contrast, are physical mixtures in which the mixing partners keep of course the respective original composition of their lattice.

In a particular embodiment, the basic salt in solid form is dolomite (in solid form, of course).

In another particular embodiment, dolomite (in solid form, of course) and $KHCO_3$ or $K_2CO_3$ (in solid form, of course) is used.

In another particular embodiment, dolomite (in solid form, of course) and $NaHCO_3$ or $Na_2CO_3$ (in solid form, of course) is used.

The term "dolomite" generally designates on the one hand a sedimentary carbonate rock ("dolostone" or "dolomite rock") that contains a high percentage (mostly at least 90% by weight, based on the total weight of the dolomite rock) of the mineral dolomite, $CaMg(CO_3)_2$. On the other hand, the term "dolomite" also designates only the mineral dolomite of the elemental formula $CaMg(CO_3)_2$.

In terms of the present invention, the term "dolomite" does not refer to dolomite rock, but refers to the mineral dolomite of the elemental formula $CaMg(CO_3)_2$, as it occurs in dolomite rock, and also includes partially calcinated dolomite, fully calcinated dolomite, all grades between, and mixtures of these forms. In partially calcinated dolomite, a part or all of the magnesium carbonate is converted into magnesium oxide. This is obtained by heating dolomite to ca. 850° C. Partially calcinated dolomite can be characterized by the formula $Ca(CO_3) / a \times MgO / b \times Mg(CO_3)$, where a and b are fractions of 1, so that a + b = 1, where a is from 0.5 to 1, preferably from 0.8 to 1, in particular from 0.9 to 1, and b is from 0 to 0.5, preferably from 0 to 0.2, in particular from 0 to 0.1. In a specific embodiment, partially calcinated dolomite has the formula $Ca(CO_3) / 0.9 \times MgO / 0.1 \times Mg(CO_3)$. Fully calcinated dolomite has the elemental formula $CaMgO_2$.

In one preferred embodiment, in the method of the invention, dolomite in the proper sense ($CaMg(CO_3)_2$) is used.

One advantage of using dolomite in the proper sense ($CaMg(CO_3)_2$) is that this reacts at a lower reaction rate and thus less exothermically with the phosphonic acid than fully calcinated dolomite. Moreover, the completion of the reaction with phosphonic acid can be monitored easily by the end of $CO_2$ formation. Another advantage is its lower cost.

In another preferred embodiment, in the method of the invention, dolomite is used in partially calcinated form.

The partially calcinated form unites advantages and disadvantages of dolomite in the proper sense and dolomite in the fully calcinated form.

In another preferred embodiment, in the method of the invention, dolomite is used in fully calcinated form.

One advantage of using dolomite in fully calcinated form is that no carbon dioxide is formed, which otherwise would have to be removed - a cumbersome process if the reaction is carried out on a high scale. Moreover, the reaction with dolomite in fully calcinated form is distinctly more exothermic than the reaction with dolomite in the proper sense, so that no external heating is necessary.

Depending inter alia on the molar ratios in which the reactants are used, the method of the invention can give primary phosphonates, secondary phosphonates or mixed forms containing both primary and secondary phosphonates. Primary phosphonates are better soluble in water than secondary phosphonates, especially in case of earth alkaline phosphonates. Depending on the intended use of the phosphonate, it can be more desirable to produce primary or rather secondary phosphonates. For many fungicidal applications it may be desirable to provide mixed forms which combine the properties of fast-acting primary phosphonates with slowlier-acting secondary phosphonates.

Preferably, dolomite is used in such amounts that the molar ratio of all metal cations $M^{2+}$ contained in dolomite, where $M^{2+}$ is $Ca^{2+}$ or $Mg^{2+}$, to phosphonic acid is of from 3:1 to 1:4, more preferably 2:1 to 1:2, in particular from 1:1 to 1:2.

Preferably, the reaction is carried out at a temperature of from 20 to 90° C, more preferably from 20 to 80° C. In one particular embodiment, the reaction is carried out at a temperature of from 50 to <80° C. More particularly however, the reaction is carried out at a temperature of from 20 to <60° C. Temperatures above ambient temperature are either reached by the exothermy of reaction or the reaction is heated. Another variant is the exertion of pressure when mixing the starting materials.

In a specific embodiment, the reaction is carried out in the presence of a disintegrant. A specific embodiment of the present method thus comprises mixing dolomite in solid form with phosphonic acid in solid form, sulfur in solid form and with a disintegrant in solid form.

A disintegrant is a material present in a composition which makes it disintegrate (and thus release the active ingredient) upon contact with water. Since the composition obtained with the method of the invention can be applied in aqueous phase, it is advantageous to provide a composition which disintegrates expediently and gives a fine dispersion in water. Suitable disintegrants are selected from the group consisting of $KHCO_3$, $K_2CO_3$, $KOH$, $NaHCO_3$, $Na_2CO_3$, $NaOH$,

microcrystalline cellulose and pregelatinized starch. In particular, $KHCO_3$ or $K_2CO_3$ and specifically $K_2CO_3$ is used. In another particular embodiment, $NaHCO_3$ or $Na_2CO_3$ and specifically $Na_2CO_3$ is used. Another suitable and preferably used disintegrant is urea. Since the role of urea in the method of the present invention and the composition obtained therewith is however not limited to its disintegrating properties, it is described separately below. The role of the above potassium and also sodium salts in the method of the present invention and the composition obtained therewith is not limited to their disintegrating properties, either. Under the given reaction conditions, at least a part of the potassium and sodium salts will react to a phosphonate. Potassium and sodium phosphonates have fungicidal activities, too. Especially the combination with a calcium and/or magnesium phosphonate has advantageous properties, resulting in combined long-term and fast fungicidal action. Both potassium and sodium salts interact with the formation of calcium phosphonates, resulting in significantly smaller particle size and thus an increased surface, improving biological availability and decreasing the wash-off and loss from leaves by rain.

The disintegrant is preferably used in an amount of from 1 to 30% by weight, preferably 5 to 25% by weight and in particular from 10 to 20%, based on the weight of the basic salt.

The solid form of the starting materials is of course such that it offers a sufficient surface for the desired reaction. Evidently, they are used in particulate form (i.e. in form of small particles) and not as a block or any other massive form.

In order to have the reaction proceed with a sufficiently high rate, it is expedient to use the starting compounds in form of particles with a relatively low particle size. Preferably, at least 80% of the basic salt particles have a particle size of at most 0.5 mm, more preferably of at most 0.1 mm, in particular of at most 50 $\mu$m, especially at most 30 $\mu$m; and at least 80% of the phosphonic acid particles have a particle size of at most 0.5 mm, preferably of at most 0.1 mm, in particular of at most 50 $\mu$m.

The percentages are relative to the number of particles.

"Particle size" in case of spherical or round particles refers to the diameter. In case of non-spherical particles, in terms of the present invention, "particle size" relates to the longest dimension of the particle, i.e. the length of that axis which connects the two points on the surface of the particle which are most remote from each other. The particle size can be determined by usual means, for example, by optical microscopy, grading or laser diffraction. Specifically, the particle size is determined by optical microscopy.

The starting material is either commercially available with such particle sizes or can be comminuted to the desired size, using customary means for this purpose, such as mills or grinders (e.g. pin mill, ball mill, bead mill, vertical roller mill, hammer mill, roller press, high compression roller mill, vibration mill, jet mill, IsaMill™), or for small quantities even mortar and pestle.

It is however also possible to use phosphonic acid with larger particle sizes, e.g. with particle sizes such that at least 80% of phosphonic acid particles have a particle size of at most 5 mm, preferably, at most 4 mm and in particular at most 1 mm.

In this case it is expedient to carry out the reaction in the presence of solid urea. It was observed that urea and phosphonic acid spontaneously form together a fluid phase (eutectic system) upon intimately bringing them into contact, in which the reaction of phosphonic acid and the basic metal or ammonium salt can take place. The desired reaction occurs at a sufficient rate even if the particle size of the starting material is not very low. Urea can of course also be used in combination with starting material with a smaller particle size, but its procedural advantage becomes manifest in case of larger particle sizes of the starting compounds.

Thus, in a preferred embodiment, the method comprises mixing the basic salt in solid form with phosphonic acid in solid form, with sulfur in solid form and with urea in solid form.

Urea is used in such amounts that the molar ratio of urea and phosphonic acid is preferably of from 2:1 to 1:10, more preferably 1.5:1 to 1:5, in particular 1:2 to 1:5.

Obviously, urea, too, is used in particulate form. The particle size of urea is such that at least 80% of the urea particles have a particle size of at most 5 mm, preferably, at most 4 mm and in particular at most 1 mm, e.g. at most 0.5 mm or at most 0.1 mm.

In another embodiment, the method of the invention does not include the use of urea.

According to the invention, the reaction is carried out in the presence of sulfur in solid form. In one embodiment, the reaction can be carried out in the presence of both sulfur and urea. In another embodiment, the reaction is carried out in the presence of sulfur and only optionally also of urea. Sulfur is preferably used in an amount of from 1 to 50% by weight, preferably 5 to 20% by weight, based on the total weight of phosphonic acid and basic salt. Sulfur is preferably used in form of wettable sulfur. Wettable sulfur is a form of very finely milled sulfur supplemented with a wetting agent, and is commercially available. In contrast to the phosphonate salts produced with the method of the invention, sulfur has a certain vapour pressure which allows its distribution via the gaseous phase. Combining the phosphonates obtained in the method of the invention with sulfur provides for a better distribution of the latter via the gaseous phase, which is important for the control of certain fungi like powdery mildew the epiphytic structures of which are exposed directly to the gaseous boundary layer or the plant surface. Another surprising advantage related with the use of sulfur is an enhanced reaction rate and enhanced conversion. The reaction starts at lower temperature and is completed earlier.

Obviously, sulfur, too, is used in particulate form. The particle size of sulfur is such that at least 80% of the sulfur particles have a particle size of at most 100 $\mu$m, preferably, at most 50 $\mu$m and in particular at most 10 $\mu$m.

The reaction can be carried out in any reactor suitable for mixing solid materials, such as roll mixers, drum mixers, tumble mixers, shakers, or any stirred apparatuses allowing stirring solid components. Furthermore, extruders can be used. The reaction can be run in a batchwise, semi-batchwise or continuous manner. Expediently, the reaction vessel can be heated or cooled, depending on the desired temperature and the reaction enthalpy.

The duration of the reaction depends on several factors, such as scheduled quantity, the specific starting compounds used (e.g. alkali metal salts generally react faster than earth alkaline salts; sulfur accelerates the reaction), the particle sizes of the starting compounds, the reaction temperature and the like and can be determined by the skilled person, e.g. by preliminary tests.

The reaction is generally carried out by simply mixing the solid reactants. Generally, the order of adding the reactants to the reaction vessel is not important. However, in case that urea is used, for processing reasons it is expedient not to first mix urea with phosphonic acid, but, for example, to first mix urea with the basic salt and mix then this mixture with phosphonic acid or to mix first the basic salt and phosphonic acid and mix then this mixture with urea or to mix all reaction partners at once.

While some of the basic salts react exothermically with the phosphonic acid and might even require cooling in order to control the reaction, others react only slowly and need heating in order to obtain a satisfactory reaction rate. Means for cooling and heating are known to the skilled person.

Despite of the water formed in the reaction, the phosphonate salts are often obtained in form of a solid composition. Especially in case of dolomite, as well as in case of the use of urea, the phosphonates are generally obtained as solid pill- or pastille-like forms. These can be easily isolated, if desired freed of any residual water, and if desired comminuted or brought into any suitable solid form. The reaction products obtained from alkaline metal salts are generally hygroscopic and even after complete removal of water often result in more sludge- or slurry-like products when exposed to ambient conditions for a longer time, especially if the air is humid. These sludges/slurries can either be stored or used as such or can be freed of water to give a solid product. Even if residual water has to be removed, the process of the invention is still distinctly less energy-consuming than the prior art process carried out in aqueous medium, since the amount of water which is removed for obtaining dry products is distinctly smaller than in case of the latter processes.

The reaction generally proceeds in high yields, so that a purification step is generally not required. If starting material remains unreacted, e.g. because it was used in excess, this can often be easily separated from the phosphonates in pill- or pastille-like forms, e.g. by sieving. Separation of the starting material can be dispensed with if this does not disturb the intended use of the product. For instance, unreacted starting material does not need to be separated if the obtained reaction product is used in crop protection.

The method of the invention makes the obtained phosphonates in a form available which is much more economic from storage and transport aspects, since the products are either obtained in a dry, flowable form (especially the phosphonates derived from dolomite and the phosphonate-urea combinations) or in form of a highly concentrated sludge or slurry. These product forms are much more economic than products obtained in aqueous medium since they can be either stored and transported in a less space- and weight-consuming way (e.g. in big bags) than the diluted prior art products or can be dried under less energy consumption, seeing that the amount of water to be removed is so much smaller than in products obtained in an aqueous medium.

The composition obtained by the method of the invention can be easily dispersed in water to yield an aqueous suspension or solution, if its use so requires. Urea and the disintegrants which are optionally used further enhance the water-dispersibility of the product. The aqueous suspensions obtained from dispersing the compositions obtained with the method of the invention are finely dispersed and stable. Due to the small particle sizes of the product the speed of sedimentation in water is low, and applicability (uniform coverage of the treated area) and biological abundance is increased.

The composition obtained by the method of the invention can however also be used in solid form, without dilution, for instance where dust, powder or granule applications are suitable, e.g. for soil or root treatment.

The composition in solid form comprising a phosphonate salt, which is obtainable by the method of the invention, is termed composition A in the following.

The solid composition A obtained by the method of the invention is very well pourable and free flowing. Moreover, the solid composition A obtained by the method of the invention is very well dispersible in aqueous medium and gives stable suspensions. "Very well dispersible" in this context means that the solid composition disintegrates readily upon contact with water and gives a fine, stable suspension (in case of water-insoluble phosphonates; water-soluble phosphonates of course instantaneously dissolve). Especially, the solid composition obtained by the method of the invention is one obtained by using dolomite, more particularly one using dolomite and urea and/or a disintegrant (especially $KHCO_3$, $K_2CO_3$, $NaHCO_3$ or $Na_2CO_3$) and sulfur. More specifically, the solid composition obtained by the method of the invention is one obtained by using dolomite, more particularly one using dolomite and a disintegrant (especially $KHCO_3$, $K_2CO_3$, $NaHCO_3$ or $Na_2CO_3$) and sulfur.

The invention moreover relates to a composition (termed composition B in the following), comprising (a) a phosphonate salt of dolomite or of dolomite and one of $KHCO_3$, $K_2CO_3$, $NaHCO_3$ or $Na_2CO_3$; and (b) sulfur and optionally also urea.

The composition B according to the invention may take the form of a physical mixture comprising a phosphonate salt of dolomite or of dolomite and one of $KHCO_3$, $K_2CO_3$, $NaHCO_3$ or $Na_2CO_3$ and sulfur and optionally urea. However, the composition may also be any combination of the active substances, where it is not necessary for the individual active substances to be present as a joint formulation.

An example of a combination of the active substances in which the phosphonate salt(s) and sulfur and optionally urea are not present in a joint formulation is a 2-component kit or a 3-component kit.

Accordingly, the present invention also relates to a 2-component kit, comprising a first component which comprises a phosphonate salt of dolomite or of dolomite and one of $KHCO_3$, $K_2CO_3$, $NaHCO_3$ or $Na_2CO_3$, a liquid or solid carrier and, if appropriate, at least one surface-active substance and/or at least one customary adjuvant, and a second component which comprises sulfur and optionally urea, a liquid or solid carrier and, if appropriate, at least one surface-active substance and/or at least one customary adjuvant.

The present invention also relates to a 3-component kit, comprising a first component which comprises a phosphonate salt of dolomite or of dolomite and one of $KHCO_3$, $K_2CO_3$, $NaHCO_3$ or $Na_2CO_3$, a liquid or solid carrier and, if appropriate, at least one surface-active substance and/or at least one customary adjuvant, a second component which comprises sulfur, a liquid or solid carrier and, if appropriate, at least one surface-active substance and/or at least one customary adjuvant, and a third component which comprises urea, a liquid or solid carrier and, if appropriate, at least one surface-active substance and/or at least one customary adjuvant.

In particular, the composition B comprises a phosphonate salt of dolomite; sulfur and optionally urea. The molar ratio of calcium ions to magnesium ions in the composition is approximately 1:1. "Approximately" in this context includes deviations as they occur from weighing errors and/or from fluctuations in the composition of the starting compounds (e.g. due to their source and natural variance of their origin) used for producing the composition of the invention. Such deviations are generally in the range of at most ± 10%, preferably of at most ± 5%. Preferably, at least 50% by weight, more preferably at least 70%, in particular at least 90% by weight of the phosphonate salt is secondary phosphonate of Ca and Mg. Urea, if present, is contained in the composition in an amount of preferably from 5 to 50% by weight, more preferably from 10 to 40% by weight, in particular from 10 to 35% by weight, based on the total weight of the calcium and magnesium phosphonate and urea. The weight ratio of the overall amount of calcium and magnesium phosphonate to sulfur is of from 100:1 to 1:100. Sulfur is present in an amount of preferably from 1 to 10% by weight, more preferably from 1 to 5%, based on the total weight of the composition.

In one preferred embodiment of composition B (termed composition B.1 in the following), the composition is in solid form.

The solid composition B.1 of the invention is very well pourable and free flowing. Moreover, the solid composition B.1 of the invention is very well dispersible in aqueous medium and gives stable suspensions. "Very well dispersible" in this context means that the solid composition disintegrates readily upon contact with water and gives a fine, stable suspension (in case of water-insoluble phosphonates; water-soluble phosphonates of course instantaneously dissolve).

Another preferred embodiment of composition B relates to a composition B.2 comprising calcium phosphonate, magnesium phosphonate and sulfur.

Unlike compositions A and B.1, composition B.2 is not necessarily solid, but can also be present in liquid form, e.g. as an aqueous dispersion.

The composition B.2 may take the form of a physical mixture comprising calcium phosphonate, magnesium phosphonate and sulfur. However, the composition may also be any combination of the active substances, where it is not necessary for the individual active substances to be present as a joint formulation.

An example of a combination of the active substances in which calcium and magnesium phosphonate and sulfur are not present in a joint formulation is a 2-component kit.

Accordingly, the present invention also relates to a 2-component kit, comprising a first component which comprises calcium phosphonate and magnesium phosphonate, a liquid or solid carrier and, if appropriate, at least one surface-active substance and/or at least one customary adjuvant, and a second component which comprises sulfur, a liquid or solid carrier and, if appropriate, at least one surface-active substance and/or at least one customary adjuvant.

The molar ratio of calcium phosphonate to magnesium phosphonate in composition B.2 is approximately 1:1. "Approximately" in this context includes deviations as they occur from weighing errors and/or from fluctuations in the composition of the starting compounds (e.g. due to their source and natural variance of their origin) used for producing the composition of the invention. Such deviations are generally in the range of at most ± 10%, preferably of at most ± 5%.

The phosphonates can be primary or secondary phosphonates or mixtures thereof. In one embodiment, composition B.2 comprises secondary phosphonates, so that an embodiment relates to a composition comprising secondary calcium phosphonate, secondary magnesium phosphonate and sulfur, and optionally also primary calcium phosphonate and/or primary magnesium phosphonate. If primary calcium and/or magnesium phosphonate are comprised in this embodiment, the weight ratio of the overall amount of secondary calcium and magnesium phosphonate to the overall amount of primary calcium and magnesium phosphonate is preferably of from 100:1 to 1:1, more preferably from 10:1 to 1.5:1, in particular from 10:1 to 2:1.

The weight ratio of the overall amount of calcium and magnesium phosphonate to sulfur is of from 100:1 to 1:100, preferably from 20:1 to 1:10, more preferably from 10:1 to 1:5, in particular from 5:1 to 1:5 and specifically from 2:1 to 1:2.

Finally, the invention relates to the use of the compositions of the invention or of an aqueous dispersion thereof for combatting harmful fungi, preferably phytopathogenic fungi, in particular foliar phytopathogenic fungi, soilborne fungi and/or seed pathogens, and to a method for protecting seed or plants which grow therefrom from the attack of harmful fungi, which method comprises treating the seeds with the solid composition of the invention or with an aqueous dispersion thereof. The use does not encompass the therapeutical treatment of the human or animal body.

The fungi to be combatted derive especially from the division of Ascomycetes, Oomycetes (syn. Peronosporomycetes), Deuteromycetes (syn. Fungi imperfecti), Zygomycetes, Plasmodiophoromycetes, Chytridiomycetes and Basidiomycetes; and further from the genera Mucor and Penicillium.

More preferably, fungi to be combatted according to the use and method of the invention are fungi from the division of Ascomycetes, Oomycetes, Deuteromycetes, Basidiomycetes and/or Zygomycetes; or are from the genera Penicillium.

In a particular embodiment, the fungi to be combatted according to the present invention are fungi of the division of Ascomycetes.

In another particular embodiment, the fungi to be combatted according to the present invention are fungi of the division of Oomycetes.

In yet another particular embodiment, the fungi to be combatted according to the present invention are fungi of the division of Deuteromycetes.

In another particular embodiment, the fungi to be combatted according to the present invention are fungi of the division of Basidiomycetes.

In yet another particular embodiment, the fungi to be combatted according to the present invention are fungi of the division of Zygomycetes.

Among the division of Ascomycetes, fungi from the genera belonging to the order of Erysiphales, more precisely to the family of Erysiphaceae; and/or fungi belonging to the genus Aspergillus and/or fungi of the order of Capnodiales are preferably combatted in the use and method of the invention. Moreover, fungi from the genus Fusarium are preferably combatted in the use and method of the invention. Combatting Fusarium species is of particular relevance because these fungi produce trichothecene mycotoxins, such as T-2 toxin, HT-2 toxin, neosolaniol, monoace-toxyscirpenol, diacetoxyscirpenol (DAS), 15-acetoxyscirpendiol, deoxynivalenol (DON = vomitoxin), nivalenol (NIV), 3-acetoxynivalenol, 15-acetoxynivalenol, fusarenone, T-2 tetraol and verrucarol. Of particular relevance are DON and NIV. More preferably, among the division of Ascomycetes, fungi from the genera belonging to the order of Erysiphales, more precisely to the family of Erysiphaceae, or to the order of Capnodiales, more precisely to the family of Mycosphaerellaceae, are combatted.

Genera belonging to Erysiphales, more precisely to Erysiphaceae, the only family within the order of Erysiphales, are Arthrocladiella, Blumeria, such as Blumeria graminis (Oidium monilioides); Brasiliomyces, Bulbomicrosphaera, Bulbouncinula, Caespitotheca, Cystotheca, Erysiphe (Oidium), such as Erysiphe betae, Erysiphe cichoracearum, Erysiphe communis, Erysiphe cruciferarum, Erysiphe graminis, Erysiphe heraclei, Erysiphe necator (syn. Oidium tuckeri or Uncinula necator), Erysiphe pisi, Erysiphe polygoni, Oidium lycopersicum or Oidium ericinum; Golvinomyces, Leveillula (Oidiopsis), Medusosphaera, Microsphaera, such as Microsphaera alphitoides, Microsphaera azalea, Microsphaera begonia or Microsphaera trifolii; Neoerysiphe, Phyllactinia (Ovulariopsis), Pleochaeta, Podosphaera, such as Podosphaera aphanis, Podosphaera aucupariae, Podosphaera leucotricha, Podosphaera macularis, Podosphaera mors-uvae or Podosphaera pannosa; Sawadaea, Setoerysiphe, Sphaerotheca, such as Sphaerotheca fuliginea; Typhulochaeta, Uncinula, such as Uncinula bicornis or Uncinula tulasnei; and Uncinuliella.

Thus, preferably, fungi belonging to the order of Erysiphales to be combatted according to the present invention are selected from the group consisting of following genera: Arthrocladiella, Blumeria, especially Blumeria graminis (Oidium monilioides); Brasiliomyces, Bulbomicrosphaera, Bulbouncinula, Caespitotheca, Cystotheca, Erysiphe (Oidium), especially Erysiphe betae, Erysiphe cichoracearum, Erysiphe communis, Erysiphe cruciferarum, Erysiphe graminis, Erysiphe heraclei, Erysiphe necator (syn. Oidium tuckeri or Uncinula necator), Erysiphe pisi, Erysiphe polygoni, Oidium lycopersicum or Oidium ericinum; Golvinomyces, Leveillula (Oidiopsis), Medusosphaera, Microsphaera, especially Microsphaera alphitoides, Microsphaera azalea, Microsphaera begonia or Microsphaera trifolii; Neoerysiphe, Phyllactinia (Ovulariopsis), Pleochaeta, Podosphaera, especially Podosphaera aphanis, Podosphaera aucupariae, Podosphaera leucotricha, Podosphaera macularis, Podosphaera mors-uvae or Podosphaera pannosa; Sawadaea, Setoerysiphe, Sphaerotheca, especially Sphaerotheca fuliginea; Typhulochaeta, Uncinula, especially Uncinula bicornis or Uncinula tulasnei; and Uncinuliella.

Genera belonging the family of Mycosphaerellaceae are Achorodothis, Asperispo-rium, Cymadothea, Euryachora, Gillotia, Isariopsis, Melanodothis, Mycosphaerella, Passalora, Phaeoramularia, Placocrea, Pseudocercospora, Ramularia, Scolico-trichum, Septoria, Sphaceloma, Sphaerella, Sphaerellothecium, Sphaerulina, Stenella, Stigmidium, Thedgonia and Wernerella. Of these, the genera Mycosphaerella and Septoria are of specific relevance.

Thus, preferably, fungi belonging to the order of Capnodiales, family of Mycosphaerellaceae to be combatted according to the present invention are of the genus Mycosphaerella or Septoria, examples of Septoria being Septoria tritici, Septoria apiicola, Septoria aciculosa, Septoria ampelina, Septoria azalea, Septoria bataticola, Septoria campanulae, Septoria cannabis, Septoria caryae, Septoria citri, Septoria cucurbitacearum, Septoria darrowii, Septoria dianthi, Septoria fragariae, Septoria glycines, Septoria helianthi, Septoria humuli, Septoria hydrangeae, Septoria lactucae, Septoria lycopersici, Septoria malagutii, Septoria matthiolae, Septoria men-thae, Septoria musiva, , Septoria ostryae, Septoria pisi, Septoria pistaciae, Septoria platanifolia, Septoria rhododendri, or Septoria selenophomoides. Among these, Septoria tritici is of particular relevance.

Fungi belonging to the genus Fusarium are for example F. acuminatum, F. avenaceum, F. crockwellense, F. culmorum, F. equiseti, F. graminearum, F. moniliforme, F. oxysporum, F. poae, F. proliferans, F. scirpi, F. sporotrichioides, F. subglutinans and F. tricinctum, among which F. culmorum and F. graminearum are the most important species to be combatted.

Thus, preferably, fungi to be combatted according to the present invention are of the genus Fusarium, such as F. acuminatum, F. avenaceum, F. crockwellense, F. culmorum, F. equiseti, F. graminearum, F. moniliforme, F. oxysporum, F. poae, F. proliferans, F. scirpi, F. sporotrichioides, F. subglutinans and F. tricinctum, among which F. culmorum and F. graminearum are the most important species to be combatted according to the present invention.

Among the above, more preferably, fungi of following genera are combatted according to the present invention: Erysiphe, Sphaeroteca and/or Septoria. Specifically, fungi belonging to the division of Ascomycetes to be combatted according to the present invention are selected from the group consisting of Erysiphe necator (syn Oidium tuckeri or Uncinula necator), Erysiphe cichoracearum, Erysiphe graminis, Sphaerotheca fuliginea and Septoria tritici. Erysiphe graminis and Septoria tritici are of particular relevance.

In another more preferred embodiment, fungi of the genus Fusarium are combatted according to the present invention. Combatting F. culmorum and F. graminearum is of specific interest.

Among the most relevant fungi from the division of Oomycetes are following genera: Pythium, especially Pythium debaryanum or Pythium ultimum; Phytophthora, especially Phytophthora infestans; Peronospora, especially Peronospora destructor, Peronospora farinose, Peronospora tabacina (= Peronospora hyoscyami f. sp. tabacina), Peronospora sparsa, Peronospora pulveracea or Peronospora pisi; Bremia, especially Bremia lactucae; Plasmopara, especially Plasmopara viticola; Albugo, especially Albugo candida; Pseudoperonospora, especially Pseudoperonospora humuli or Pseudoperonospora cucumerinum; and Sclerospora, especially Sclerospora graminicola.

Thus, preferably, fungi belonging to the division of Oomycetes to be combatted according to the present invention are selected from the group consisting of following genera: Pythium, especially Pythium debaryanum or Pythium ultimum; Phytophthora, especially Phytophthora infestans; Peronospora, especially Peronospora destructor, Peronospora farinose, Peronospora tabacina (= Peronospora hyoscyami f. sp. tabacina), Peronospora sparsa, Peronospora pulveracea or Peronospora pisi; Bremia, especially Bremia lactucae; Plasmopara, especially Plasmopara viticola; Albugo, especially Albugo candida; Pseudoperonospora, especially Pseudoperonospora humuli or Pseudoperonospora cucumerinum; and Sclerospora, especially Sclerospora graminicola.

Even more preferably, fungi belonging to the division of Oomycetes to be combatted according to the present invention are selected from the group consisting of Pythium debaryanum, Pythium ultimum, Phytophthora infestans, Peronospora destructor, Peronospora farinose, Peronospora tabacina, Peronospora sparsa, Peronospora pulveracea, Peronospora pisi, Bremia lactucae, Plasmopara viticola, Albugo candida, Pseudoperonospora humuli, Pseudoperonospora cucumerinum and Sclerospora graminicola.

In particular, fungi belonging to the division of Oomycetes to be combatted according to the present invention are Plasmopara viticola and Pythium ultimum.

Among the Deuteromycetes (syn. Fungi imperfecti), fungi to be preferably combatted according to the present invention are fungi from the order of Botrytis, Alternaria, Cladosporium, Fusarium, Monilia, Phoma and/or Stemphylium.

In particular, fungi belonging to the division of Deuteromycetes to be combatted according to the present invention are fungi from the order of Fusarium.

Among the Basidiomycetes, fungi to be preferably combatted according to the present invention are fungi from the order of Pucciniales. A relevant genus falling under the order of puccinilales is Puccinia. Specias falling under the order of Puccinia are for example Puccinia asparagi, Puccinia graminis, Puccinia horiana, Puccinia mariae-wilsoniae, Puccinia poarum, Puccinia psidii, Puccinia recondita, Puccinia sessilis, Puccinia striiformis, Puccinia triticina, or Puccinia punctiformis. Of these, Puccinia recondita and Puccinia striiformis are of particular relevance.

Among the Zygomycetes, fungi from the genus Rhizopus is to be combatted.

The genus Rhizopus encompasses following species: Rhizopus oryzae, Rhizopus rouxii, Rhizopus microsporus, Rhizopus azygosporus, Rhizopus homothallicus, Rhizopus caespitosus, Rhizopus stolonifera and Rhizopus sexualis. Specifically, among the fungi of this genus, Rhizopus stolonifera is combatted according to the present invention.

In a preferred embodiment, the fungicidal use and method of the invention serve for combatting harmful fungi in plants, plant propagation material and/or soil wherein the plants grow or are to grow.

"Plant propagation material" refers to all generative parts of plants from which a complete plant can grow, such as seeds, grains, fruits, tubers, the rhizome, spores, cuttings or meristem tissue. Preferably, it refers to seeds.

The term "soil" as presently used is not restricted to soil as such (i.e. the material forming the pedosphere), be it present in the field, in a pot or border, but encompasses any suitable growth medium or growth substrate in which plants can grow, thus also artificial media. Preferably, however, it means soil in the proper sense.

The compositions of the invention are effective against a broad spectrum of phytopathogenic fungi, including soil-borne fungi.

The target organisms are phytopathogenic fungi, in particular foliar phytopathogenic fungi, the latter being fungi which attack the overground part of the plant and in particular the leaves. However, the use and the method according to the invention also provide protection from soilborne or seed pathogens. Preferably, the target organisms for the present invention are foliar phytopathogenic fungi. Thus, in the (fungicidal) use and the method of the invention, preferably the overground part of the plant and in particular the leaves and, where expedient, additionally or alternatively also the stems or the branches (e.g. hops stems) are treated with the composition of the invention. In another embodiment, the target organisms for the (fungicidal) use and method of the present invention are soilborne pathogens. According to this aspect, the underground part of the plants, e.g. the roots, or the medium in which the plants grow or are to grow, e.g. the soil, are treated with composition of the invention. In another preferred embodiment, the target organisms for the (fungicidal) use and method of the present invention are seed pathogens. According to this aspect, the propagation material, e.g. the seeds, or the medium in which they are sown or are to be sown is treated with composition of the invention.

Under this aspect (i.e. combatting harmful fungi in plants, plant propagation material and/or soil wherein the plants grow or are to grow), more preferably, fungi to be combatted according to the use and method of the invention are selected from Ascomycetes, Deuteromycetes, Oomycetes and Basidiomycetes.

In a particular embodiment, the fungi to be combatted according to the present invention are fungi of the division of Ascomycetes.

In another particular embodiment, the fungi to be combatted according to the present invention are fungi of the division of Oomycetes.

In a particular embodiment, the fungi to be combatted according to the present invention are fungi of the division of Deuteromycetes.

In a particular embodiment, the fungi to be combatted according to the present invention are fungi of the division of Basidiomycetes.

From the division of Ascomycetes, fungi from the order of Erysiphales are among the most relevant fungi in agriculture. An important number of fungi of the order of Erysiphales cause plant diseases called powdery mildew. Thus, in case that the fungicidal use and the fungicidal method of the invention are to be applied to plants, plant propagation material or to the soil in which the plant grows or is to grow, among the Ascomycetes, fungi from the order of Erysiphales are preferably to be combatted with the use and the method of the invention. Genera and species belonging to Erysiphales to be preferably combatted have already been listed above and reference is made thereto. Thus, fungi of following genera are in particular combatted according to the present invention: Erysiphe and/or Sphaeroteca. Specifically, fungi belonging to the division of Ascomycetes to be combatted according to the present invention are selected from the group consisting of Erysiphe necator (syn Oidium tuckeri or Uncinula necator), Erysiphe graminis and Sphaerotheca fuliginea.

From the division of Ascomycetes, fungi of the genera Mycosphaerella and Septoria are of particular relevance and are preferably combatted according to the use and method of the invention. Mycosphaerella is a genus with more than 10,000 species and is the largest genus of plant pathogen fungi. Among these, Mycosphaerella graminicola or its anamorph Septoria tritici are of particular relevance.

From the division of Basidiomycetes, fungi of the genus Puccinia are of particular relevance and are preferably combatted according to the use and method of the invention. Puccinia recondita and Puccinia striiformis are of particular relevance.

With respect to the fungi from the division of Oomycetes to be preferably treated, reference is made to what has been said above. Thus, the specific fungi belonging to the division of Oomycetes to be combatted according to the present invention are Plasmopara viticola and Pythium, such as Pythium ultimum.

The target organisms for the present invention are preferably fungi responsible for fungal diseases in agricultural plants selected from grapes, hops, vegetables, such as tomato, bellpepper, cucurbit, cucumber, zucchini or eggplant, turf, tobacco, ornamentals, cereals and leguminosae and more preferably from grapes, hops, vegetables, cereals and leguminosae.

The term "grapes" includes vine.

The term "vegetable" is defined in the present invention through cultural tradition and does not refer to a biologically defined plant category. It is rather defined negatively by excluding fruit plants (fruit being here understood in the culinary sense again and not as the biological term), nuts, cereals and pseudocereals. Examples for vegetables are tomato, bellpepper, cucurbit, cucumber, zucchini, eggplant, cabbage, turnip, parsnip, radish, carrot, beetroot, onion, garlic, potato, sweet potato, leek and the like. Preferably, the vegetables are selected from the group consisting of tomato, bellpepper, cucurbit, cucumber, zucchini and eggplant.

Cereals are the cultivated forms of grasses (Poaceae) and include for example wheat (inclusive spelt, einkorn, emmer, kamut, durum and triticale), rye, barley, rice, wild rice, maize (corn), millet, sorghum, teff, fonio and oats.

Leguminosae or leguminous plants are for example soybean, beans, pea, chick-peas, lentils, alfalfa, peanut, carob, or liquorice.

The target organisms for the present invention are in particular fungal diseases in grapes.

In an alternative particular embodiment, the target organisms for the present invention are fungal diseases in hops.

In yet another particular embodiment, the target organisms for the present invention are fungi responsible for fungal diseases in vegetables selected from the group consisting of tomato, bellpepper, cucurbit, cucumber, zucchini and eggplant.

In yet another particular embodiment, the target organisms for the present invention are fungi responsible for fungal diseases in tobacco.

In yet another particular embodiment, the target organisms for the present invention are fungi responsible for fungal diseases in cereals, specifically wheat or maize.

In yet another particular embodiment, the target organisms for the present invention are fungi responsible for fungal diseases in leguminosae, specifically soybean.

In a preferred embodiment, the compositions of the invention are used for combatting powdery mildew, especially for combatting powdery mildew in grapes, hops, vegetables, turf, tobacco, ornamentals, cereals and/or leguminous plants, more preferably in grapes, hops, vegetables cereals and/or leguminous plants, in particular in grapes, cereals and/or leguminous plants. The vegetables are preferably selected from the group consisting of tomato, bellpepper, cucurbit, cucumber, zucchini and eggplant and are specifically cucumber, the cereals are specifically wheat or maize, and the leguminous plants are specifically soybean.

In another preferred embodiment, the compositions of the invention are used for combatting downy mildew, especially for combatting downy mildew in grapes, hops, vegetables, turf, tobacco, ornamentals and/or cereals, more preferably in grapes, hops, vegetables and/or cereals, in particular in grapes, hops and/or cereals, specifically in grapes and/or hops, and very specifically in grapes. The vegetables are preferably selected from the group consisting of tomato, bellpepper, cucurbit, cucumber, zucchini and eggplant and are specifically cucumber, and the cereals are specifically wheat.

In another preferred embodiment, the compositions of the invention are used for combatting Pythium, especially for combatting Pythium in leguminosae, in particular in soybean.

In another preferred embodiment, the compositions of the invention are used for combatting Fusarium, especially for combatting Fusarium in cereals, in particular in wheat or maize.

In another preferred embodiment, the compositions of the invention are used for combatting fungi of the genus Septoria in cereals, in particular Septoria tritici in wheat, or of the genus Puccinia in cereals, in particular Puccinia recondita or Puccinia striiformis. Septoria infections lead to leaf blotch. Puccinia recondita causes brown rust and Puccinia striiformis yellow rust.

In another preferred embodiment, the compositions of the invention are used for combatting Phytophthora, especially Phytophthora infestans, in Kauri trees.

In a specific embodiment, the compositions of the invention are used for combatting cereal leaf complex disease. Often, cereals are affected by more than just one infection and suffer at the same time of, for example at least two of leaf blotch, rust and powdery mildew. This phenomenon is called cereal leaf complex disease. Especially composition B.2 has proved as efficacious against such complex infection forms.

The plants are preferably treated in such a way that the plant or plant parts thereof are contacted with the compositions of the invention or with an aqueous dispersion thereof.

These remarks apply analogously to the treatment of seeds or soil.

The composition can be applied in various forms, e.g. as a liquid formulation, e.g. an aqueous dispersion, especially an aqueous suspension, or in solid form, such as a dust or powder or granules.

If the composition is applied in form of a liquid formulation, e.g. an aqueous dispersion, especially an aqueous suspension, the ready-to-use formulation contains the phosphonate salt in an amount of preferably from 0.01 to 30 g/l, more preferably from 0.01 to 25 g/l, in particular from 0.01 to 20 g/l, more particularly from 0.05 to 10 g/l, even more particularly from 1 to 10 g/l and specifically from 2 to 10 g/l.

The treatment of the plants or parts thereof or of the seeds or soil in which the plant grow or is to grow can be both protective and curative, i.e. before or after an infection with phytopathogenic fungi. It is preferably carried out as close in time as possible to the infection event, i.e. before or after the infection at a point in time which is as close as possible to the infection. More preferably, it is carried out as protective treatment, i.e. before an infection with phytopathogenic fungi takes place.

The timing of the application, the number of applications and the application rates employed in each case have to be adapted to the prevailing conditions and have to be determined for each individual case by a person skilled in the art.

For instance, the application rate for a protective treatment via foliar application is generally in the range of from 0.01 to 100 kg/ha of phosphonate salt, preferably from 0.1 to 50 kg/ha, more preferably from 0.1 to 20 kg/ha, in particular from 1 to 15 kg/ha and specifically from 1 to 10 kg/ha. The optimum application rates depend inter alia on the plant to be treated, on weather conditions (rainy conditions, for instance, generally making higher rates necessary), and on whether a protective or curative treatment is carried out (a curative treatment generally requiring lower application rates than a protective treatment), and can be determined for the individual case by the skilled person.

In a particular embodiment, if the composition is to be used as an aqueous formulation in foliar application, the aqueous formulation expediently contains an adjuvant facilitating the penetration of plant cuticles, such as a wetting agent. The amount of wetting agent depends both on the type of agent and the plant target surface and is typically in the range from 0.001 to 1% by weight, in particular from 0.01 to 0.1% by weight, based on the total weight of the ready-to-use formulation. Wetting agents can be of anionic or nonionic nature and are, for example, naphthalenesulfonic acids including their alkali metal, alkaline earth metal, ammonium and amine salts, fatty alcohol ethoxylates, ethoxylated alkylphenols, alkyl polyglycosides, glycerol fatty acid esters, castor oil alkoxylates, fatty acid alkoxylates, fatty amide alkoxylates, fatty polydiethanolamides, lanolin ethoxylates, fatty acid polyglycol esters or organosilicons, such as the Silwet® brands.

Especially for a curative treatment, the addition of adjuvants facilitating the penetration of plant cuticles is expedient. Thus, especially in curative treatments, and especially if the composition is to be used as an aqueous formulation in foliar application, the aqueous formulation preferably contains a wetting agent.

The composition is not limited to act as a fungicide on plants, but has a general fungicidal action and can thus also be used for protecting material different from plants, plant propagation material and soil in which the plant grows or is to grow, such as, for example, inanimate material, from fungal attack, or for combatting fungi on material different from plants, plant propagation material or soil in which the plant lives or is to grow, such as, for example, inanimate material. Thus, the present composition can also be used as a preservative and/or in the control of fungi in or on inanimate material, where the use does not encompass the therapeutic treatment of the human or animal body.

Inanimate material to be treated according to the invention is for example foods. Another example for inanimate material is construction materials, such as plastering, coatings, paint, timber, flooring materials, metal, glass, brick, polymeric materials or concrete.

The invention is now illustrated by the following examples.

Examples

A. Synthetic examples

Dolomite powder and fully calcinated dolomite were obtained from Dolomitwerk Jettenberg, Germany. Phosphonic acid was obtained from ICL-IP Bitterfeld-Wolfen, Germany. Dolomite was ground to a particle size of at most 30 $\mu$m. Fully calcinated dolomite had a particle size of at most 60 $\mu$m. Unless stated otherwise, phosphonic acid was ground to a particle size of at most 60 $\mu$m.

Example 1 (not according to the invention)

4.8 g of fully calcinated dolomite, 8.2 g of coarse particles of $H_3PO_3$ and 6 g of prilled urea were added into a cylindrical glass container, closed with a cap and mixed on a commercial laboratory rolling mixer. Within 48 h small ball-shaped pills (diameter about 2-3mm) were formed. These pills constituted more than 90% by weight of the reaction product and were formed of Ca/Mg phosphonate and urea. The residual 10% was unreacted starting material in form of a fine powder which was separated by grading and reprocessed in a new batch.

Example 2 (not according to the invention)

4.56 g of fully calcinated dolomite, 0.69 g of $K_2CO_3$ and 3 g of urea were premixed and ground to a fine powder and heated to 80 C°. Then 8.2 g of $H_3PO_3$ were added and intensively mixed until reaction (foaming by $CO_2$) started. Incubation at 80 C° was continued for 5 minutes until the foam had completely collapsed and a rigid solid had formed. This solid can be grounded easily to a fine powder for further shaping processes.

Example 3 (not according to the invention)

4.56 g of fully calcinated dolomite and 0.69 g of $K_2CO_3$ were premixed and ground to a fine powder and heated to 80 C°. Then 8.2 g of $H_3PO_3$ were added and intensively mixed until reaction (foaming by $CO_2$) started. Incubation at 80 C° was continued for 5 minutes until the foam had completely collapsed and a rigid solid had formed. This solid can be grounded easily to a fine powder for further shaping processes.

Example 4 (not according to the invention)

9.2 g of non-calcinated dolomite (dolomite in the proper sense) and 8.2 g of $H_3PO_3$ were added to a mortar, mixed and kneaded intensively for about two minutes until reaction started, indicated by turning into a slurry-like consistence and evolution of $CO_2$. After some minutes when the reaction was almost finished, the slurry solidified again. Short heating (microwave or oven) expelled some still remaining moisture, resulting in a crumbly dry mass which can be further ground and shaped easily.

Example 5 (not according to the invention)

7 g of partially calcinated dolomite and 8.2 g of $H_3PO_3$ were added to a mortar, mixed and kneaded intensively. Within a minute the reaction started, indicated by turning into a slurry-like consistence and evolution of $CO_2$. After some minutes when the reaction was almost finished, the slurry solidified again. Short heating (microwave or oven) expelled some still remaining moisture, resulting in a crumbly dry mass which can be further ground and shaped easily.

Example 6 (not according to the invention)

13.8 g of $K_2CO_3$ and 8.2 g of $H_3PO_3$ were added to a mortar, mixed and kneaded intensively. Within a minute the reaction started, indicated by turning into a slurry-like consistence and evolution of $CO_2$. After some minutes when the reaction was almost finished, the slurry solidified again. Short heating (microwave or oven) removed some residual moisture, resulting in a crumbly dry mass which can be further ground and shaped easily.

Example 7 (not according to the invention)

15.8 g of $NH_4HCO_3$ and 8.2 g of $H_3PO_3$ were added to a mortar, mixed and kneaded intensively. Within a minute the reaction started, indicated by turning into a slurry-like consistence, evolution of $CO_2$ and a slight smell of ammonia. After some minutes when the reaction was almost finished, the slurry solidified again. Short heating (microwave or oven) removed some residual moisture, resulting in a crumbly dry mass which can be further ground and shaped easily.

Example 8 (not according to the invention)

3.8 g of fully calcinated dolomite, 2.8 g $K_2CO_3$, 8.2 g of coarse particles of $H_3PO_3$ and 6 g of prilled urea were added to a cylindrical glass container, closed with a cap (with a small hole, so that $CO_2$ could blow off) and mixed on a commercial laboratory rolling mixer. Within 48 h small ball-shaped pills (diameter about 2-3 mm) were formed. These pills constituted more than 90% by weight of the reaction product and were formed of Ca/Mg/K phosphonate and urea. The residual <5% was unreacted starting material in form of a fine powder which was separated by grading and reprocessed in a new batch.

Example 9 (not according to the invention)

9.2 g of non-calcinated dolomite (dolomite in the proper sense) and 8.2 g of $H_3PO_3$ were mixed and heated. When approaching the melting point of $H_3PO_3$ (74°C), the reaction started, indicated by turning into a slurry-like consistence and evolution of $CO_2$, When the reaction was finished, the slurry solidified again. After cooling down the dry mass can be further ground and shaped easily.

Example 10

4 mol of phosphonic acid were mixed with 0.5 mol of $KHCO_3$, 1.2 mol of non-calcinated dolomite (dolomite in the proper sense) and 1 mol of sulfur (used as commercial product "Defend WG" from Qinmetal Internacional). Start of reaction was accelerated by addition of 5 ml of water. The reaction was mixed until the whole composition became fluid; then the mixture was incubated at 60° C for about one hour until reaction was finished, and the water was evaporated completely. The product has a baiser-like texture and can be further processed (e.g. milling) very easily.

Example 11

4 mol of phosphonic acid were mixed with 0.5 mol of NaHCO$_3$, 1.2 mol of non-calcinated dolomite (dolomite in the proper sense) and 1 mol of sulfur (used as commercial product "Defend WG" from Qinmetal Internacional). Start of reaction was accelerated by addition of 5 ml of water. The reaction was mixed until the whole composition became fluid; then the mixture was incubated at 60° C for about one hour until reaction was finished, and the water was evaporated completely. The product has a baiser-like texture and can be further processed (e.g. milling) very easily.

B. Application examples

B.1 Control of Pythium ultimum in corn (not according to the invention)

Pots were filled to 4/5 with potting soil. In a part of the pots (control for no infection) 5 corn seeds were placed on top and covered with a further layer of soil. All other pots were infested with spores of highly aggressive strains of Pythium ultimum. In a part of the infested pots 5 corn seeds were placed on top and covered with a further layer of soil (control for no fungicide treatment). In the other infested pots 5 corn seeds and phosphonate granules from example 8 (300 mg or 600 mg) were placed on top and covered with a further layer of soil. The pots were placed in a growth chamber and watered regularly. After 3 weeks seed germination, plant growth and root morphology were assessed. The results are compiled in the table below.

Table 1

| Treatment | Observation |
|---|---|
| no phosphanate treatment | No emergence of seedlings, no root development |
| 300 mg phosphonate granules from example 1 | Comparable plant and root development as in non-infected control (100% healthy plants) |
| 600 mg phosphonate granules from example 1 | Comparable plant and root development as in non-infected control (100% healthy plants) |

B.2 Control of Pythium ultimum in peppergrass (not according to the invention)

In each case 25 peppergrass seeds were placed on water agar in petri dishes of 6 cm diameter and a part of the dishes was inoculated by spraying with a spore suspension of Pythium ultimum. After 2 h 250 μl of a diluted suspension prepared from the phosphonate granules of example 1 were added to the infected dishes and spread with a Drigalski spatula. All Petri dishes were incubated in a growth chamber at 22° C.
After 2 days, all seeds hat developed a radicle. Hypocotyl and leaf development were observed during the next 5 days.
The uninfected dishes gave more than 20 plants per dish without symptoms of any damage. Also the phosphonate-treated dishes gave more than 20 plants per dish. In the infected, but untreated dishes most seeds germinated, but stopped in different stages of development. The results obtained with the infected dishes are listed in the following table.

Table 2

| Treatment | Observation |
|---|---|
| no phosphanate treatment | <5% healthy plants; severe growth depression; brownish roots, beginning rotting and damp off |
| 1 mg - 10 μg phosphonate per dish | 100% healthy plants |
| 5 μg mg phosphonate per dish | 70% healthy plants |

B.3 Control of Penicillium spec. on artificial medium

The Ca/Mg phosphonate product of a scale-up of example 4 using 400 g of H$_3$PO$_3$ was suspended in 1 l of water and diluted with water to a final concentration to correspond to 200 mg of phosphonate anion per liter ("200 ppm").

Preparation of artificial growth medium for fungi

Commercial potato-dextrose-agar (PDA) used for maintaining fungal cultivars contains significant amounts of phosphate. Phosphates, however, may falsify the results of tests of the fungicidal activity of phosphonates since phosphates and phosphonates compete at the target site. Therefore, a phosphate-free PDA was prepared as follows: 330 ml of malt beer were heated with 330 mg of calcium hydroxide to degas and precipitate any soluble phosphate and filtered. Colorimetric assay of the filtrate showed that the remaining phosphate content was lower than 1 ppm (initial concentration of phosphate was > 100 ppm). Then 1 g of dextrose and 1.8 g of agar were added and the medium was heated to boiling point until dissolution of solids, autoclaved and used to prepare sterile test plates.

Set up of plate tests for fungal growth

The tests plates were treated either with of an aqueous dispersion of Ca/Mg phosphonate (1 ml, 200 ppm of phosphonate anion) or with wettable sulfur (used as the commercial product "Defend WG" from Qinmetal Internacional) or with both the aqueous dispersion of Ca/Mg phosphonate and wettable sulfur. As a control, the test plates were treated with 1 ml of water. Treatment with wettable sulfur was carried out by fixing filter papers soaked with the commercial sulfur fungicide preparation (1 ml, 10000 ppm of sulfur) with adhesive tape at the inside of plate lids. The advantage of this assay design is that artefacts by any direct interaction between formulation components, the alkaline pH of the commercial wettable sulfur formulation and the Ca/Mg phosphonate are avoided. On the other hand, sulfur was nevertheless available in sufficient amounts via vapour phase.
It has to be mentioned that the use of sulfur in apparent excess in the present experiment as compared to the phosphonate salt is due to the specific experimental set-up in which sulfur acts only via vapour phase without direct contact to the substrate. If sulfur and phosphonates are used in admixture or sulfur is applied directly to the substrate to be treated, reverse mixing ratios (excess of phosphonates over sulfur) or equivalent amounts are possible and even preferred.
Aliquots of freshly prepared spore suspension of *Penicillium spec.* were pipetted in the center of the thusly treated agar plates. Fungal growth was rated by visual assessment of agar surface covered by mycelium one week after inoculation (inhibition of growth and development). Trials were run with each 10 replicates.
The degree of efficiency (D.E.) was calculated by the following formula:

$$\text{D.E.} = \frac{\text{area of infestation control - area of infestation treatment}}{\text{area of infestation control}} \times 100$$

The expected efficiency (D.E. additive) for active compound combinations (i.e. calcium/magnesium phosphonate and sulfur) was determined using Colby's formula (Colby, S. R., "Calculating synergistic and antagonistic responses of herbicide combinations", Weeds, 15, pp. 20-22, 1967) and compared to the observed efficiency. To be more precise, D.E. additive was calculated by the following formula:

$$\text{D.E.}_{additive} = \text{D.E.}_{sulfur} + \text{D.E.}_{Ca/Mg\ phosphonate} - [\text{D.E.}_{sulfur} \times \text{D.E.}_{Ca/Mg\ phosphonate} / 100]$$

The results are compiled in Table 3.

Table 3

| Active ingredient | Area covered by fungal structures [%] | Observed efficiency [%] | Calculated efficiency [%] |
|---|---|---|---|
| - (Control) | 83.3 | - | - |
| Sulfur 10,000 ppm | 82.8 | 0.7 | - |
| Ca/Mg phosphonate 200 ppm | 31.7 | 62 | - |
| Sulfur + Ca/Mg phosphonate (10,000 + 200 ppm) | 16.1 | 80.7 | 62.3 |

As can be seen, the combination of calcium/magnesium phosphonate with sulfur has an overadditive (synergistic) effect on the growth of *Penicillium spec.*.

B.4 Control of Septoria tritici in winter wheat in a field trial

The trial was carried out in Untergruppenbach, Germany. Seeds of the winter wheat cultivar "Monopoly" were sown in autumn 2018 and cultivated under customary conditions. Seeding was conducted at a seeding rate of 380 seeds/m$^2$; **row spacing was 15 cm.** Trial set up was **randomized complete block design with 4 replications.** The plot sizes were 3 x 8 m$^2$. In April 2019, when the plants were in BBCH stage 31 (BBCH = Biologische Bundesanstalt, Bundessortenamt und Chemische Industrie - German Federal Biological Research Centre for Agriculture and Forestry; the BBCH code is a growth scale for identifying the phenological development stages of plants), they were treated by foliar spraying with either an aqueous dispersion of a phosphonate prepared by mixing 1 mol of phosphonic acid, 0.32 mol of dolomite and 0.1 mol of KOH (molar ratio of Ca$^{2+}$+Mg$^{2+}$ to K$^+$ of 6.4:1) (300 l/ha, 2.16 kg of phosphonate per ha) or with the aqueous phosphonate dispersion and also with an aqueous sulfur dispersion (Heliosoufre from Omya) (2.45 kg S per ha). The treatment was repeated after 10 days, then after 7 days and again after another 7 days. During this time, the fungal pressure of Septoria tritici (natural occurrence) was high. Three weeks after the last treatment, leaves F-1 and F-2 (F-1 being the leaf below the flag leaf and F-2 the leaf below F-1) of 25 randomly chosen plants per plot were inspected visually for speckled leaf blotch infection with Mycosphaerella graminicola (Septoria tritici) and the infected leaf area was determined. The results are compiled in Table 4. The letters show whether according to the Student-New-man-Keuls (SNK) method the average values differ significantly ($p = 0.05$) from each other (different letters) or not (same letters).

Table 4

| Active ingredient | Infected area on F-1 [%] | Infected area on F-2 [%] |
|---|---|---|
| - (Control) | 5.3 (a) | 9.5 (a) |
| Phosphonate | 3.3 (b) | 6.1 (b) |
| Phosphonate + Sulfur | 1.8 (c) | 4.8 (bc) |

At the point of time of the first treatment, leaf F-1 was not yet fully developed and was not infected. Leaf F-2, by contrast, was already infected. The results thus show that the treatment according to the invention acts both protectively and curatively.

In the present set-up sulfur was used in slight excess (w/w), but reverse w/w mixing ratios (excess of phosphonates over sulfur) or equivalent w/w amounts of phosphonates and sulfur act analogously.

**Claims**

1.  A method for producing a composition containing a phosphonate salt, the method comprising mixing phosphonic acid in solid form with a basic salt in solid form and sulfur in solid form, where the basic salt in solid form is selected from dolomite in solid form and dolomite in solid form in combination with one of KHCO$_3$, K$_2$CO$_3$, NaHCO$_3$ or Na$_2$CO$_3$.

2.  The method according to claim 1, where phosphonic acid and the basic salt in solid form contain in sum at most 10% by weight, preferably at most 5% by weight, in particular at most 2% by weight, specifically at most 1% by weight, very specifically at most 0.5% by weight, of liquid components (generally water), based on the total weight of phosphonic acid and the basic salt, and where no water or at most 1% by weight of water, based on the total weight of phosphonic acid and the basic salt, is added to the phosphonic acid and the basic salt; where preferably no water or at most 1% by weight of water, based on the total weight of phosphonic acid, is added to the phosphonic acid and the basic salt; and where in particular no water is added.

3.  The method according to any of the preceding claims, where at least 80% of the basic salt have a particle size of at most 0.5 mm, preferably of at most 0.1 mm, and in particular of at most 50 $\mu$m; and at least 80% of the phosphonic acid have a particle size of at most 0.5 mm.

4.  The method according to any of the preceding claims, where dolomite and phosphonic acid are used in a molar ratio of from 3:1 to 1:4, preferably from 1:1 to 1:2.

5.  The method according to any of the preceding claims, where sulfur is used in an amount of from 1 to 50% by weight, preferably 5 to 20% by weight, based on the total weight of phosphonic acid and basic salt.

6.  The method according to any of the preceding claims, where the phosphonic acid in solid form and the basic salt in solid form are reacted at a temperature of from 20 to 90° C, preferably from 20 to 80° C, specifically from 50 to <80° C or from 20 to <60° C or from 20 to <50° C.

7. Composition, comprising (a) a phosphonate salt of dolomite or of dolomite and one of $KHCO_3$, $K_2CO_3$, $NaHCO_3$ or $Na_2CO_3$, and (b) sulfur and optionally also urea.

8. The composition according to claim 7, which is in solid form.

9. The composition according to any of claims 7 or 8, comprising calcium phosphonate, magnesium phosphonate and sulfur, where calcium phosphonate is selected from secondary calcium phosphonate, primary calcium phosphonate and a mixture of secondary and primary calcium phosphonate, and magnesium phosphonate is selected from secondary magnesium phosphonate, primary magnesium phosphonate and a mixture of secondary and primary magnesium phosphonate;
and in particular comprising secondary calcium phosphonate, secondary magnesium phosphonate and sulfur, and optionally also primary calcium phosphonate and/or primary magnesium phosphonate.

10. The composition according to any of claims 7 to 9, where the weight ratio of the overall amount of calcium and magnesium phosphonate to sulfur is of from 100:1 to 1:100, preferably from 20:1 to 1:10, more preferably from 10:1 to 1:5, in particular from 5:1 to 1:5 and specifically from 2:1 to 1:2.

11. The composition according to any of claims 7 to 10, further comprising potassium phosphonate, where potassium phosphonate is selected from secondary potassium phosphonate, primary potassium phosphonate and a mixture of secondary and primary potassium phosphonate, where preferably the molar ratio of calcium and magnesium phosphonate to potassium phosphonate is of from 20:1 to 2:1, preferably 10:1 to 3:1, in particular 8:1 to 5:1; or further comprising sodium phosphonate, where sodium phosphonate is selected from secondary sodium phosphonate, primary sodium phosphonate and a mixture of secondary and primary sodium phosphonate, where preferably the molar ratio of calcium and magnesium phosphonate to sodium phosphonate is of from 20:1 to 2:1, preferably 10:1 to 3:1, in particular 8:1 to 5:1.

12. The use of a composition according to any of claims 7 to 11, where in case that the composition is solid, this can also be used in form of an aqueous dispersion thereof, for combatting harmful fungi, preferably phytopathogenic fungi, in particular foliar phytopathogenic fungi, soilborne fungi and/or seed pathogens;
where the use does not encompass the therapeutical treatment of the human or animal body.

13. A method for protecting seed or plants which grow therefrom from the attack of harmful fungi, which method comprises treating the seeds with a composition according to any of claims 7 to 11, where in case that the composition is solid, this can also be used in form of an aqueous dispersion thereof.

14. A 2-component kit or a 3-component kit,

where the 2-component kit comprises a first component which comprises a phosphonate salt of dolomite or of dolomite and one of $KHCO_3$, $K_2CO_3$, $Na$-$HCO_3$ or $Na_2CO_3$, a liquid or solid carrier and, if appropriate, at least one surface-active substance and/or at least one customary adjuvant, and a second component which comprises sulfur and optionally urea, a liquid or solid carrier and, if appropriate, at least one surface-active substance and/or at least one customary adjuvant; and
where the 3-component kit comprises a first component which comprises a phosphonate salt of dolomite or of dolomite and one of $KHCO_3$, $K_2CO_3$, $Na$-$HCO_3$ or $Na_2CO_3$, a liquid or solid carrier and, if appropriate, at least one surface-active substance and/or at least one customary adjuvant, a second component which comprises sulfur, a liquid or solid carrier and, if appropriate, at least one surface-active substance and/or at least one customary adjuvant, and a third component which comprises urea, a liquid or solid carrier and, if appropriate, at least one surface-active substance and/or at least one customary adjuvant.

**Patentansprüche**

1. Verfahren zur Herstellung einer Zusammensetzung, die ein Phosphonatsalz enthält, wobei das Verfahren das Mischen von Phosphonsäure in fester Form mit einem basischen Salz in fester Form und Schwefel in fester Form umfasst, wobei das basische Salz in fester Form aus Dolomit in fester Form und Dolomit in fester Form in Kombination

mit einem von $KHCO_3$, $K_2CO_3$, $NaHCO_3$ oder $Na_2CO_3$ ausgewählt wird.

2. Verfahren nach Anspruch 1, wobei Phosphonsäure und das basische Salz in fester Form insgesamt höchstens 10 Gew.-%, vorzugsweise höchstens 5 Gew.-%, insbesondere höchstens 2 Gew.-%, speziell höchstens 1 Gew.-%, ganz speziell höchstens 0,5 Gew.-%, flüssige Komponenten (im Allgemeinen Wasser), bezogen auf das Gesamtgewicht von Phosphonsäure und dem basischen Salz, enthalten und wobei kein Wasser oder höchstens 1 Gew.-% Wasser, bezogen auf das Gesamtgewicht von Phosphonsäure und dem basischen Salz, zu der Phosphonsäure und dem basischen Salz zugegeben wird, wobei vorzugsweise kein Wasser oder höchstens 1 Gew.-% Wasser, bezogen auf das Gesamtgewicht von Phosphonsäure, zu der Phosphonsäure und dem basischen Salz zugegeben wird und wobei insbesondere kein Wasser zugegeben wird.

3. Verfahren nach einem der vorhergehenden Ansprüche, wobei mindestens 80 % des basischen Salzes eine Teilchengröße von höchstens 0,5 mm, vorzugsweise von höchstens 0,1 mm und insbesondere von höchstens 50 μm aufweisen und mindestens 80 % der Phosphonsäure eine Teilchengröße von höchstens 0,5 mm aufweisen.

4. Verfahren nach einem der vorhergehenden Ansprüche, wobei Dolomit und Phosphonsäure in einem Molverhältnis von 3:1 bis 1:4, vorzugsweise von 1:1 bis 1:2, verwendet werden.

5. Verfahren nach einem der vorhergehenden Ansprüche, wobei Schwefel in einer Menge von 1 bis 50 Gew.-%, vorzugsweise 5 bis 20 Gew.-%, bezogen auf das Gesamtgewicht von Phosphonsäure und basischem Salz, verwendet wird.

6. Verfahren nach einem der vorhergehenden Ansprüche, wobei die Phosphonsäure in fester Form und das basische Salz in fester Form bei einer Temperatur von 20 bis 90° C, vorzugsweise von 20 bis 80 °C und speziell von 50 bis <80 °C oder von 20 bis <60 °C oder von 20 bis <50 °C umgesetzt werden.

7. Zusammensetzung, umfassend (a) ein Phosphonatsalz von Dolomit oder von Dolomit und einem von $KHCO_3$, $K_2CO_3$, $NaHCO_3$ oder $Na_2CO_3$ und (b) Schwefel und gegebenenfalls auch Harnstoff.

8. Zusammensetzung nach Anspruch 7, die in fester Form vorliegt.

9. Zusammensetzung nach Anspruch 7 oder 8, umfassend Calciumphosphonat, Magnesiumphosphonat und Schwefel, wobei Calciumphosphonat aus sekundärem Calciumphosphonat, primärem Calciumphosphonat und einer Mischung von sekundärem und primärem Calciumphosphonat ausgewählt ist und Magnesiumphosphonat aus sekundärem Magnesiumphosphonat, primärem Magnesiumphosphonat und einer Mischung von sekundärem und primärem Magnesiumphosphonat ausgewählt ist;
und insbesondere umfassend sekundäres Calciumphosphonat, sekundäres Magnesiumphosphonat und Schwefel und gegebenenfalls auch primäres Calciumphosphonat und/oder primäres Magnesiumphosphonat.

10. Zusammensetzung nach einem der Ansprüche 7 bis 9, wobei das Gewichtsverhältnis der Gesamtmenge von Calcium und Magnesiumphosphonat zu Schwefel 100:1 bis 1:100, vorzugsweise 20:1 bis 1:10, stärker bevorzugt 10:1 bis 1:5, insbesondere 5:1 bis 1:5 und speziell 2:1 bis 1:2 beträgt.

11. Zusammensetzung nach einem der Ansprüche 7 bis 10, ferner umfassend Kaliumphosphonat, wobei Kaliumphosphonat aus sekundärem Kaliumphosphonat, primärem Kaliumphosphonat und einer Mischung von sekundärem und primärem Kaliumphosphonat ausgewählt ist, wobei vorzugsweise das Molverhältnis von Calcium- und Magnesiumphosphonat zu Kaliumphosphonat 20:1 bis 2:1, vorzugsweise 10:1 bis 3:1, insbesondere 8:1 bis 5:1, beträgt; oder ferner umfassend Natriumphosphonat, wobei Natriumphosphonat aus sekundärem Natriumphosphonat, primärem Natriumphosphonat und einer Mischung von sekundärem und primärem Natriumphosphonat ausgewählt ist, wobei vorzugsweise das Molverhältnis von Calcium- und Magnesiumphosphonat zu Natriumphosphonat 20:1 bis 2:1, vorzugsweise 10:1 bis 3:1, insbesondere 8:1 bis 5:1, beträgt.

12. Verwendung einer Zusammensetzung nach einem der Ansprüche 7 bis 11, wobei in dem Fall, dass die Zusammensetzung fest ist, diese auch in Form einer wässrigen Dispersion davon verwendet werden kann, zur Bekämpfung von Schadpilzen, vorzugsweise phytopathogenen Pilzen, insbesondere phytopathogenen Blattpilzen, Bodenpilzen und/oder Saatgutpathogenen;
wobei die Verwendung nicht die therapeutische Behandlung des menschlichen oder tierischen Körpers umfasst.

**13.** Verfahren zum Schutz von Saatgut oder Pflanzen, die daraus wachsen, vor dem Angriff von Schadpilzen, wobei das Verfahren das Behandeln des Saatguts mit einer Zusammensetzung nach einem der Ansprüche 7 bis 11 umfasst, wobei in dem Fall, dass die Zusammensetzung fest ist, diese auch in Form einer wässrigen Dispersion davon verwendet werden kann.

**14.** 2-Komponenten-Kit oder 3-Komponenten-Kit,

wobei das 2-Komponenten-Kit eine erste Komponente, die ein Phosphonatsalz von Dolomit oder von Dolomit und einem von $KHCO_3$, $K_2CO_3$, $NaHCO_3$ oder $Na_2CO_3$, einen flüssigen oder festen Träger und gegebenenfalls mindestens eine oberflächenaktive Substanz und/oder mindestens einen üblichen Hilfsstoff umfasst, und eine zweite Komponente, die Schwefel und gegebenenfalls Harnstoff, einen flüssigen oder festen Träger und gegebenenfalls mindestens eine oberflächenaktive Substanz und/oder mindestens einen üblichen Hilfsstoff umfasst, umfasst,

wobei das 3-Komponenten-Kit eine erste Komponente, die ein Phosphonatsalz von Dolomit oder von Dolomit und einem von $KHCO_3$, $K_2CO_3$, $NaHCO_3$ oder $Na_2CO_3$, einen flüssigen oder festen Träger und gegebenenfalls mindestens eine oberflächenaktive Substanz und/oder mindestens einen üblichen Hilfsstoff umfasst, eine zweite Komponente, die Schwefel, einen flüssigen oder festen Träger und gegebenenfalls mindestens eine oberflächenaktive Substanz und/oder mindestens einen üblichen Hilfsstoff umfasst, und eine dritte Komponente, die Harnstoff, einen flüssigen oder festen Träger und gegebenenfalls mindestens eine oberflächenaktive Substanz und/oder mindestens einen üblichen Hilfsstoff umfasst, umfasst.

**Revendications**

**1.** Procédé de production d'une composition contenant un sel de phosphonate, le procédé comprenant le mélange d'acide phosphonique sous forme solide avec un sel basique sous forme solide et du soufre sous forme solide, dans lequel le sel basique sous forme solide est choisi parmi la dolomite sous forme solide et la dolomite sous forme solide en combinaison avec l'un parmi $KHCO_3$, $K_2CO_3$, $NaHCO_3$ ou $Na_2CO_3$.

**2.** Procédé selon la revendication 1, dans lequel l'acide phosphonique et le sel basique sous forme solide contiennent en somme au plus 10 % en poids, de préférence au plus 5 % en poids, en particulier au plus 2 % en poids, spécifiquement au plus 1 % en poids, très spécifiquement au plus 0,5 % en poids, de composants liquides (généralement de l'eau), par rapport au poids total d'acide phosphonique et du sel basique, et dans lequel pas d'eau ou au plus 1 % en poids d'eau, par rapport au poids total d'acide phosphonique et du sel basique, est ajouté à l'acide phosphonique et au sel basique ; dans lequel de préférence pas d'eau ou au plus 1 % en poids d'eau, par rapport au poids total d'acide phosphonique et du sel basique, est ajouté à l'acide phosphonique et au sel basique ; et où en particulier pas d'eau n'est ajoutée.

**3.** Procédé selon l'une quelconque des revendications précédentes, dans lequel au moins 80 % du sel basique a une taille de particule d'au plus 0,5 mm, de préférence d'au plus 0,1 mm, et en particulier d'au plus 50 $\mu$m ; et au moins 80 % de l'acide phosphonique a une taille de particule d'au plus 0,5 mm.

**4.** Procédé selon l'une quelconque des revendications précédentes, dans lequel la dolomite et l'acide phosphonique sont utilisés en un rapport molaire de 3:1 à 1:4, de préférence de 1:1 à 1:2.

**5.** Procédé selon l'une quelconque des revendications précédentes, dans lequel le soufre est utilisé en une quantité de 1 à 50 % en poids, de préférence de 5 à 20 % en poids, par rapport au poids total de l'acide phosphonique et du sel basique.

**6.** Procédé selon l'une quelconque des revendications précédentes, dans lequel on fait réagir l'acide phosphonique sous forme solide et le sel basique sous forme solide à une température de 20 à 90 °C, de préférence de 20 à 80 °C, spécifiquement de 50 à < 80 °C ou de 20 à < 60 °C ou de 20 à < 50 °C.

**7.** Composition comprenant (a) un sel de phosphonate de dolomite ou de dolomite et l'un parmi $KHCO_3$, $K_2CO_3$, $NaHCO_3$ ou $Na_2CO_3$, et (b) du soufre et éventuellement également de l'urée.

**8.** Composition selon la revendication 7, qui est sous forme solide.

**9.** Composition selon l'une quelconque des revendications 7 et 8, comprenant du phosphonate de calcium, du phosphonate de magnésium et du soufre, dans laquelle le phosphonate de calcium est choisi parmi le phosphonate de calcium secondaire, le phosphonate de calcium primaire et un mélange de phosphonate de calcium secondaire et primaire, et le phosphonate de magnésium est choisi parmi le phosphonate de magnésium secondaire, le phosphonate de magnésium primaire et un mélange de phosphonate de magnésium secondaire et primaire ;

et comprenant en particulier du phosphonate de calcium secondaire, du phosphonate de magnésium secondaire et du soufre, et éventuellement également du phosphonate de calcium primaire et/ou du phosphonate de magnésium primaire.

10. Composition selon l'une quelconque des revendications 7 à 9, dans laquelle le rapport en poids de la quantité totale de phosphonate de calcium et de magnésium au soufre est de 100:1 à 1:100, de préférence de 20:1 à 1:10, plus préférablement de 10:1 à 1:5, en particulier de 5:1 à 1:5 et spécifiquement de 2:1 à 1:2.

11. Composition selon l'une quelconque des revendications 7 à 10, comprenant en outre un phosphonate de potassium, dans laquelle le phosphonate de potassium est choisi parmi le phosphonate de potassium secondaire, le phosphonate de potassium primaire et un mélange de phosphonate de potassium secondaire et primaire, dans laquelle de préférence le rapport molaire de phosphonate de calcium et de magnésium sur phosphonate de potassium est de 20:1 à 2:1, de préférence de 10:1 à 3:1, en particulier de 8:1 à 5:1 ; ou comprenant en outre du phosphonate de sodium, dans laquelle le phosphonate de sodium est choisi parmi le phosphonate de sodium secondaire, le phosphonate de sodium primaire et un mélange de phosphonate de sodium secondaire et primaire, dans laquelle de préférence le rapport molaire de phosphonate de calcium et de magnésium sur phosphonate de sodium est de 20:1 à 2:1, de préférence 10:1 à 3:1, en particulier de 8:1 à 5:1.

12. Utilisation d'une composition selon l'une quelconque des revendications 7 à 11, où dans le cas où la composition est solide, celle-ci peut aussi être utilisée sous la forme d'une dispersion aqueuse de celle-ci, pour lutter contre des champignons nuisibles, de préférence des champignons phytopathogènes, en particulier des champignons phytopathogènes foliaires, des champignons telluriques et/ou des pathogènes de graines ;

où l'utilisation n'englobe pas le traitement thérapeutique du corps humain ou animal.

13. Procédé pour protéger une graine ou des végétaux qui poussent à partir de celle-ci contre l'attaque de champignons nuisibles, lequel procédé comprend le traitement des graines par une composition selon l'une quelconque des revendications 7 à 11, où dans le cas où la composition est solide, celle-ci peut également être utilisée sous la forme d'une dispersion aqueuse de celle-ci.

14. Kit à 2 composants ou kit à 3 composants,

dans lequel le kit à 2 composants comprend un premier composant qui comprend un sel de phosphonate de dolomite ou de dolomite et d'un parmi $KHCO_3$, $K_2CO_3$, $NaHCO_3$ ou $Na_2CO_3$, un support liquide ou solide et, le cas échéant, au moins une substance tensioactive et/ou au moins un adjuvant habituel, et un second composant qui comprend du soufre et éventuellement de l'urée, un support liquide ou solide et, le cas échéant, au moins une substance tensioactive et/ou au moins un adjuvant habituel ; et/ou

dans lequel le kit à 3 composants comprend un premier composant qui comprend un sel de phosphonate de dolomite ou de dolomite et l'un de $KHCO_3$, $K_2CO_3$, $NaHCO_3$ ou $Na_2CO_3$, un support liquide ou solide et, le cas échéant, au moins une substance tensioactive et/ou au moins un adjuvant habituel, un second composant qui comprend du soufre, un support liquide ou solide et, le cas échéant, au moins une substance tensioactive et/ou au moins un adjuvant habituel, et un troisième composant qui comprend de l'urée, un support liquide ou solide et, le cas échéant, au moins une substance tensioactive et/ou au moins un adjuvant habituel.

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2009150076 A
- US 5707418 A
- US 20060234900 A
- WO 2013083250 A
- WO 2013098573 A
- US 8101548 B

**Non-patent literature cited in the description**

- **COLBY, S. R.** Calculating synergistic and antagonistic responses of herbicide combinations. *Weeds*, 1967, vol. 15, 20-22